**Europäisches Patentamt**

**European Patent Office**

**Office européen des brevets**

(11) Numéro de publication : **0 369 865 B1**

(12)

# FASCICULE DE BREVET EUROPEEN

(45) Date de publication du fascicule du brevet :
**28.04.93 Bulletin 93/17**

(51) Int. Cl.$^5$ : **G21D 3/08,** G21C 7/36

(21) Numéro de dépôt : **89403096.4**

(22) Date de dépôt : **09.11.89**

(54) **Procédé de pilotage de réacteur nucléaire à eau sous pression.**

(30) Priorité : **14.11.88 FR 8814771**

(43) Date de publication de la demande :
**23.05.90 Bulletin 90/21**

(45) Mention de la délivrance du brevet :
**28.04.93 Bulletin 93/17**

(84) Etats contractants désignés :
**BE DE GB**

(56) Documents cités :
**EP-A- 0 051 542
EP-A- 0 097 488
EP-A- 0 128 834
FR-A- 2 244 235**

(73) Titulaire : **FRAMATOME
Tour Fiat 1, Place de la Coupole
F-92400 Courbevoie (FR)**

(72) Inventeur : **Trouble, Michel
18, rue des Gaillons
F-92210 Saint Cloud (FR)**
Inventeur : **Millot, Jean-Paul
1, allée des Roitelets
F-78310 Elancourt (FR)**
Inventeur : **Leroy, Jean-Luc
91, avenue du Général Leclerc
F-91190 Gif sur Yvette (FR)**

(74) Mandataire : **Fort, Jacques et al
CABINET PLASSERAUD 84, rue d'Amsterdam
F-75009 Paris (FR)**

## Description

L'invention a pour objet un procédé de pilotage de réacteur nucléaire à eau sous pression, du type suivant lequel on modifie la position de barres de commande dans le coeur lorsqu'un paramètre de conduite représentatif de l'écart entre la puissance du coeur et la puissance appelée (tel que la température moyenne du coeur) sort d'un intervalle déterminé, dit "bande morte", les barres déplacées étant choisies de façon à éviter d'accentuer l'écart entre la déviation axiale de puissance et une valeur de référence ; les termes "déviation axiale de puissance" désignent le rapport entre la différence des flux neutroniques dans les moitiés supérieure et inférieure du coeur et la somme de ces flux, ou un autre paramètre représentatif du déséquilibre des flux le long du trajet de circulation de l'eau de réfrigération dans le coeur.

On connaît déjà un procédé de pilotage du type ci-dessus défini (EP-A-00 51 542 ou FR-A-2 493 582). Les barres servant au pilotage contiennent un matériau absorbant fortement les neutrons sans donner naissance à des isotopes fissiles (hafnium par exemple), en quantité telle que les barres présentent une anti-réactivité suffisante pour assurer un suivi de charge (habituellement environ 1000 pcm lorsque les barres sont totalement insérées dans le coeur). Les barres sont généralement constituées par une grappe de crayons ayant chacun une gaine contenant des pastilles de matériau absorbant.

Le document EP-A-00 51542 propose la loi de pilotage suivante :
- si le paramètre de conduite est à l'extérieur de la bande morte, on détermine, en fonction de la valeur et du signe de ce paramètre, le sens et la vitesse de déplacement à donner à un groupe de barres choisi en fonction de la déviation axiale de façon à éviter d'écarter cette dernière de la valeur de référence ;
- si le paramètre de conduite est à l'intérieur de la bande, on ne déplace un groupe de barres pour réduire la déviation axiale que si l'écart entre cette dernière et la valeur de référence dépasse un seuil déterminé, on compense alors ce déplacement par une variation de la concentration en bore.

Ce procédé suivant l'art antérieur nécessite l'utilisation, en plus des barres de pilotage (et de barres d'arrêt qui, en fonctionnement normal, sont toujours extraites du coeur et qui ne sont insérées que pour arrêter le réacteur et le maintenir à l'arrêt), de bore sous forme de composé soluble dans l'eau constituant réfrigérant ; la teneur du bore est modifiée pour compenser la diminution de la réactivité, due notamment à l'épuisement progressif du combustible, et pour augmenter fortement l'anti-réactivité en cas d'accident grave. La teneur initiale doit en conséquence être très élevée.

Souvent, la variation de la teneur de l'eau en bore est également utilisée pour régler la puissance du réacteur et notamment compenser les variations de l'effet xénon, les grappes de pilotage n'étant déplacées que pour faire varier la réactivité au cours des transitoires rapides de fonctionnement.

L'utilisation de bore dissous dans l'eau constituant le réfrigérant primaire a des avantages. L'anti-réactivité qu'elle introduit est répartie régulièrement dans le coeur. En contrepartie, elle a des inconvénients graves. La présence du bore se traduit par une production importante d'effluents liquides, qui doivent être traités par une installation complexe. L'acide borique corrode certains matériaux, notamment les gaines en alliage à base de zirconium.

Un autre inconvénient est lié au fait qu'il serait dangereux de compter uniquement sur l'injection de bore pour arrêter le réacteur en cas d'incident grave car, de par sa construction, le système d'injection de bore soluble a une constante de temps importante. Si on utilise le bore soluble en tant qu'élément essentiel de commande, il n'en est pas moins nécessaire que les barres absorbantes aient une anti-réactivité suffisante pour permettre l'arrêt d'urgence du réacteur. Le suivi de charge implique de pouvoir diminuer rapidement la teneur en bore. Cela devient impossible dès que la teneur en fonctionnement normal a été ramenée à une valeur faible du fait de l'usure du coeur.

On a déjà proposé des procédés permettant de réduire la teneur maximale en bore à donner à l'eau constituant le réfrigérant primaire et/ou les variations de teneur lors du fonctionnement. Suivant le document FR-A-2 547 447, on déplace des groupes de barres de commande et, éventuellement, on modifie la concentration en bore soluble dans le circuit primaire, lorsqu'il faut amener le réacteur d'un état $\varphi$ exprimant la puissance et la distribution axiale réelle de ce réacteur à un état de consigne $\varphi c$, en fonction des résultats d'un calcul. Ce calcul consiste à déterminer la variation à donner à des paramètres externes (notamment position des grappes de contrôle et concentration en bore) par un calcul itératif qui implique d'élaborer une relation de couplage entre les paramètres externes et l'état du réacteur en fonction de paramètres internes non commandables, tels que le coefficient de modération. Une fois la relation de couplage déterminée, on détermine les variations optimales des paramètres externes permettant de se rapprocher de l'état de consigne $\varphi c$. Mais le document FR-A-2 547 447 ne fait pas apparaître comment on peut déterminer la relation de couplage et semble bien ne prendre en considération que la répartition axiale de puissance, alors qu'il est important de ne pas négliger la répartition radiale de puissance et notamment le risque d'apparition de pics de puissance.

Une autre solution permettant de réduire les variations de concentration en bore requises pour compenser

EP 0 369 865 B1

l'épuisement du combustible, donc la teneur initiale en bore, consiste à faire varier le spectre d'énergie des neutrons au cours d'un cycle de fonctionnement du coeur, en partant d'un spectre épithermique. Le document FR-A-2 496 319 fait connaître un tel procédé, suivant lequel on extrait des barres "grises", c'est-à-dire ayant une absorption neutronique modérée, au fur et à mesure de l'épuisement du coeur. L'emplacement de ces barres est alors occupé par de l'eau qui augmente le rapport de modération et rapproche le spectre d'énergie des neutrons du domaine thermique. La puissance du réacteur est pilotée à l'aide de barres "noires". Pour cela, on mesure le flux neutronique local dans plusieurs zones du coeur avec des détecteurs fixes installés en grand nombre et on choisit la combinaison de déplacements des barres qui donne la variation de réactivité requise en perturbant au minimum le profil de répartition de puissance, en fonction de la puissance appelée. Ce procédé implique un calcul extrêmement complexe, mettant en oeuvre les résultats d'un très grand nombre de détecteurs de flux placés dans le coeur et pourtant ce procédé ne permet pas de s'affranchir complètement de l'utilisation de bore à l'état de composé soluble pour piloter le réacteur.

L'invention vise notamment à fournir un procédé de pilotage de réacteur à eau pressurisée, du type ci-dessus défini, permettant de suivre les variations de charge appelée sans modification de la teneur en bore de l'eau constituant réfrigérant primaire, teneur qui peut être nulle. Elle vise particulièrement à permettre de maintenir à la fois le paramètre de conduite à proximité de sa valeur de consigne, par exemple en maintenant la température moyenne au voisinage d'une température de référence, et la déviation axiale de puissance à proximité de sa valeur de référence, cela sans modification de la teneur en bore soluble en fonctionnement normal, y compris jusqu'à l'arrêt à température intermédiaire. Elle vise enfin à éviter de perturber la répartition radiale de puissance pour arriver aux résultats ci-dessus.

Dans ce but, l'invention propose notamment un procédé du genre ci-dessus défini dans lequel - les barres de pilotage absorbantes ayant une anti-réactivité suffisante pour compenser la totalité des variations de réactivité intervenant au cours du fonctionnement normal du réacteur et en cas d'incident requérant l'arrêt d'urgence du réacteur alors que le réfrigérant est à sa température normale de fonctionnement - lorsque le paramètre de conduite sort de la bande morte et/ou que l'écart de la distribution axiale de puissance dépasse une valeur de référence, on détermine, par un processus de simulation, celles des grappes qui doivent être déplacées de façon à ramener ledit paramètre de conduite et/ou ledit écart vers leurs valeurs normales tout en minimisant un facteur d'élévation d'enthalpie dans le coeur, l'élévation d'enthalpie étant définie comme la différence entre la valeur de l'enthalpie (fonction polynomiale de la température) à la sortie du coeur et l'enthalpie à l'entrée du coeur, éventuellement à un instant antérieur et le facteur d'élévation d'enthalpie comme le rapport entre la valeur maximale de l'élévation et sa valeur moyenne dans le coeur (ou dans un secteur prédéterminé du coeur).

La sécurité de fonctionnement du réacteur exige une redondance des moyens permettant de compenser les variations de réactivité et d'arrêter la réaction neutronique en cas de défaillance de certaines barres.

Dans le cas d'un pilotage sans bore, ce résultat peut notamment être atteint en prévoyant, d'une part, des barres "noires" destinées uniquement à provoquer l'arrêt du réacteur et complètement extraites du coeur en régime de fonctionnement normal et, d'autre part, des barres de pilotage "grises", c'est-à-dire dont l'anti-réactivité individuelle est intermédiaire entre celle de barres "transparentes" en matériau à faible absorption neutronique et celle des barres noires, ayant des systèmes de manoeuvre totalement indépendants ; si globalement les barres de pilotage "grises" ont une anti-réactivité suffisante, on assure une redondance telle que l'arrêt d'urgence reste possible même en cas de défaut de fonctionnement d'un système.

Dans le cas d'un réacteur à variation de spectre, la somme de l'anti-réactivité des barres d'arrêt et de l'anti-réactivité des barres de pilotage doit au surplus être suffisante pour que, lorsque toutes ces barres sont insérées dans le coeur, l'arrêt soit maintenu même lorsque la température de l'eau constituant réfrigérant a diminué jusqu'à une valeur intermédiaire à partir de la valeur de fonctionnement normal. L'injection de bore n'est plus nécessaire que pour maintenir le réacteur arrêté lorsque le réfrigérant est froid.

Du fait qu'un grand nombre de barres de pilotage "grises" (ayant généralement une anti-réactivité à peu près moitié de celle des barres noires, par exemple 75 pcm au lieu de 150 pcm) devient alors nécessaire, il est avantageux de répartir les barres en deux jeux, chaque barre d'un jeu (ou son mécanisme de commande) étant coaxiale à une barre de l'autre jeu (ou à son mécanisme de commande). On diminue ainsi le nombre de pénétrations requises à travers le couvercle de la cuve du réacteur.

Le procédé de pilotage suivant l'invention apporte de nombreux avantages. Du fait qu'il n'y a plus de bore ou qu'il y a peu de bore dans l'eau en fonctionnement normal, le coefficient de variation de la réactivité en fonction de la température est toujours fortement négatif, ce qui est utile dans tous les accidents tendant à augmenter la température du coeur. De plus la grande valeur en anti-réactivité des grappes fait qu'il n'y a plus de risque de divergence du réacteur en cas de rupture de tuyauterie vapeur. La production de tritium est réduite. Les effluents primaires sont réduits. Le mode choisi de détermination de la barre (ou des barres) à déplacer permet d'éviter ou d'atténuer les facteurs de pics de répartition radiale du flux neutronique, tout en permettant

3

un fonctionnement du réacteur en suivi de charge.

L'invention sera mieux comprise à la lecture de la description qui suit d'un procédé qui en constitue un mode particulier d'exécution, donné à titre d'exemple non limitatif. La description se réfère aux dessins qui l'accompagnent, dans lesquels :

- la Figure 1 est un schéma montrant la répartition des divers emplacements de barres de commande, dans une fraction de la section horizontale du coeur d'un réacteur représentatif ;
- la Figure 2 est une courbe représentative de l'anti-réactivité à insérer dans un coeur de réacteur pendant un cycle, pris à titre d'exemple,
- les Figures 3A, 3B et 3C sont des diagrammes donnant respectivement des exemples de variations de la déviation axiale de puissance, du facteur d'élévation d'enthalpie F∆H et de la position des barres de pilotage dans un des six secteurs angulaires du réacteur de la Figure 1, suivant l'anti-réactivité à insérer dans le coeur ;
- la Figure 4 montre une répartition possible de la position des barres de pilotage en fonction de la réactivité insérée, différente de celle montrée en Figure 3C ;
- la Figure 5 est un exemple de courbe représentative du facteur d'élévation d'enthalpie F∆H (rapport de l'élévation d'enthalpie dans le canal le plus chaud à la moyenne sur tous les canaux) dans l'assemblage le plus chaud d'un secteur, en fonction de ∆H ;
- la Figure 6 est un organigramme de principe de mise en oeuvre du procédé ;
- la figure 7, similaire à la figure 6, montre une variante de mise en oeuvre ;
- - la figure 8 est un schéma montrant une autre variante encore de mise en oeuvre permettant de réduire les déséquilibres radiaux.

L'exemple de mise en oeuvre de l'invention qui sera maintenant décrit peut être considéré comme représentatif de l'application du procédé à un réacteur de puissance à eau sous pression, ayant par exemple une puissance de 1300 MW, dont le coeur est constitué par des assemblages combustibles de section hexagonale juxtaposés. On ne décrira pas ici la constitution générale du réacteur qui peut être similaire à celle de réacteurs à eau sous pression actuellement étudiés, tels notamment celui décrit dans le document EP-A-0 231 710, bien que l'invention soit également applicable à un coeur à réseau carré.

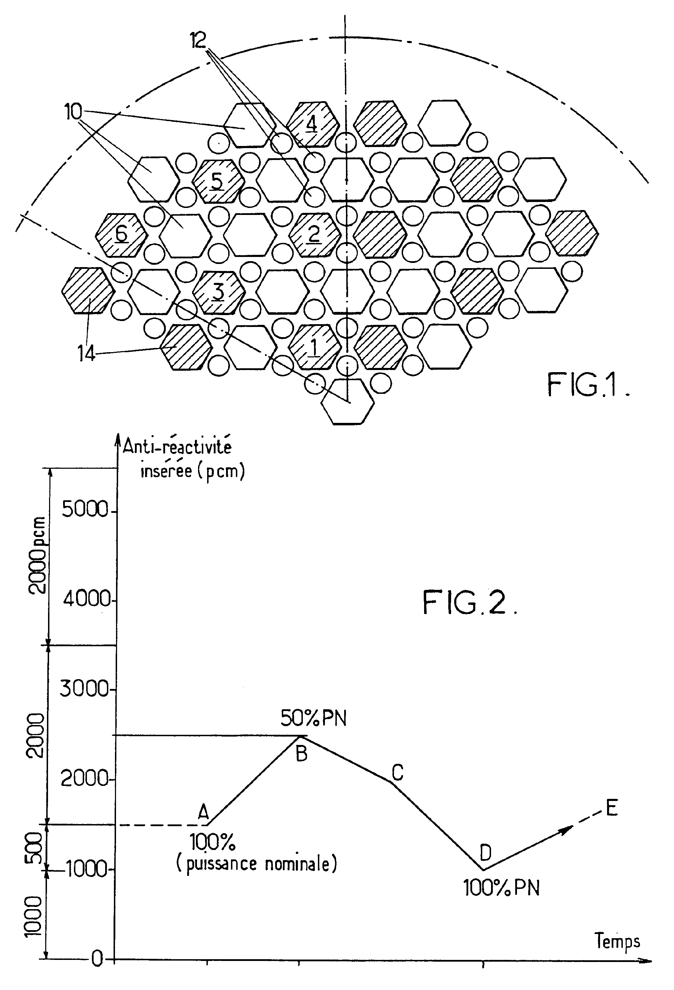

Le coeur peut être regardé comme comportant six secteurs angulaires ayant tous la même constitution et, pour cette raison, deux secteurs seulement sont montrés complètement sur la Figure 1.

Chaque secteur comporte trente-neuf assemblages combustibles (en négligeant l'assemblage central du coeur) surmontés chacun d'un mécanisme d'insertion de barres de commande. Les huit emplacements 10, indiqués par des hexagones blancs, sont destinés à recevoir des barres d'arrêt neutronique, dites "noires" parce qu'ayant une forte absorption des neutrons. Le réacteur comporte en conséquence quarante-neuf barres d'arrêt en tout, suffisantes pour arrêter le réacteur chaud à elles seules. Elles sont constituées chacune d'une grappe de crayons comportant chacun une gaine, prévus pour s'insérer dans des tubes guides de l'assemblage correspondant et contenant des pastilles de matériau absorbant. On voit que le réacteur comporte en tout quarante-neuf grappes d'arrêt, complètement extraites du coeur (c'est-à-dire contenues dans les internes supérieurs du réacteur) lors du fonctionnement normal de ce dernier.

Chaque secteur a également vingt emplacements d'assemblage 12 prévus pour recevoir des barres extraites du coeur après un temps de fonctionnement représentant une fraction de la durée totale d'un cycle. Les barres prévues aux vingt emplacements 12 contiennent du poison consommable, dont la disparition progressive compense l'épuisement du combustible au cours d'une phase initiale de fonctionnement. Les grappes ne sont pas nécessairement relevées toutes ensembles. En fonction de l'épuisement du combustible, on relève un premier ensemble de grappes 12. Ensuite on relève un deuxième ensemble de grappes dans un délai plus ou moins grand. Les ensembles de grappes sont déterminés de façon à ne pas perturber la distribution de puissance radiale. Le degré d'insertion des grappes 12 de poison consommable est indépendant de la gestion du combustible et peut être choisi de façon à rendre la distribution de puissance radiale aussi constante que possible. On ne décrira donc pas le mode de commande de ces grappes. Il faut seulement mentionner qu'elles permettent également de modifier le spectre d'énergie des neutrons : lorsqu'elles sont extraites du coeur, les tubes-guides qui les recevaient précédemment sont envahis par de l'eau, ce qui augmente le rapport de modération du coeur. Cet effet de variation du spectre neutronique vers les basses énergies est renforcé si les grappes contiennent du matériau fertile, comme cela est décrit par exemple dans le document EP-A-0 231 710.

Enfin, les emplacements 14 indiqués par des hexagones hachurés sur la Figure 1 sont destinés à recevoir les barres de pilotage. Ces barres sont encore constituées de grappes de crayons absorbants. Pour réduire le nombre de traversées du couvercle requises pour commander les déplacements de toutes les barres nécessaires, il est avantageux de prévoir deux barres indépendantes à chaque emplacement 14 et de les commander par deux mécanismes placés coaxialement ou côte à côte. On connaît déjà des dispositifs permettant de déplacer indépendamment deux barres de commande occupant le même emplacement dans le coeur. Certains arrangements permettent une indépendance complète de déplacement. Plus souvent, pour des raisons de simplification, l'arrangement implique une contrainte : l'une des deux barres, déterminée à l'avance, doit toujours avoir une insertion dans le coeur plus faible que l'autre barre (ou même ne peut être descendue que lorsque l'autre est complètement insérée dans le coeur).

Dans le cas montré en Figure 1, on voit que chaque secteur du coeur comprend six emplacements 14, chacun pour un jeu de deux barres de pilotage, régulièrement répartis.

La Figure 2 donne un exemple faisant apparaître la variation maximale d'anti-réactivité totale dans le coeur qui doit être disponible par insertion et retrait des barres de pilotage. La Figure 2 correspond à un cas où l'anti-réactivité totale à prévoir se décompose de la façon suivante, pour un coeur neuf en début de vie :

```
Réserve de combustion (après déduction
de l'effet du poison consommable) :          1000 pcm
Marge de pilotage :                            500 pcm
Marge de fonctionnement en puissance :        2000 pcm
Compensation de l'effet xénon :               2000 pcm
```

La réserve de combustion de 1000 pcm, destinée à permettre l'utilisation du réacteur à 100% de sa puissance nominale, est compensée, lorsque le coeur est neuf, par les 6 x 20 grappes de poison consommable placées aux emplacements 12. Lorsque le coeur est neuf, il n'y a aucun empoisonnement par le xénon et ce sont les grappes de pilotage situées aux emplacements 14 qui doivent fournir l'anti-réactivité correspondant à l'empoisonnement xénon maximum. En conséquence, les grappes de pilotage doivent représenter une anti-réactivité au moins égale à 5500 pcm.

La Figure 2 montre, à titre d'exemple, une évolution représentative, susceptible d'intervenir au cours du temps suivant laquelle on a, successivement :
- fonctionnement à 100% de puissance nominale avec saturation en xénon (point A) ;
- passage à 50% de la puissance nominale (point B) ;
- maintien à 50% de la puissance nominale, accompagnée d'une variation de l'anti-réactivité due au xénon (point C) ;
- retour à 100% de la puissance nominale sans modification de la teneur en xénon (point D) ;
- diminution progressive de l'anti-réactivité due au xénon (point E) ;

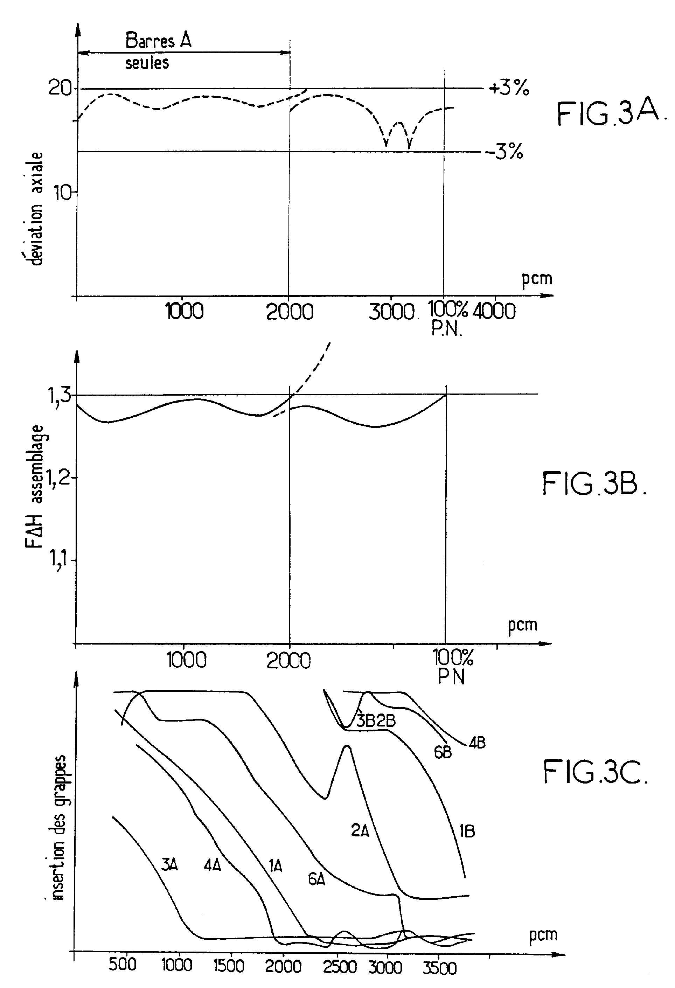

On décrira maintenant, en faisant référence aux Figures 3A, 3B, 3C les conditions de mise en oeuvre d'un procédé de pilotage selon l'invention dans le cas où il vise à maintenir :
- le paramètre de conduite, constitué par la différence entre la température réelle à la sortie du coeur et une température de consigne, dans une plage morte de + ou - 3°C ;
- l'écart entre la déviation axiale réelle et la déviation de référence correspondante dans une plage de ± 3% (Figure 3A) ;
- le facteur d'élévation d'enthalpie F$\Delta$H à une valeur minimale et en tout cas inférieure à 1,3 (Figure 3B).

L'élévation d'enthalpie $\Delta$H peut être calculée soit pour un assemblage de combustible individuel, soit pour une fraction du coeur, soit même pour le coeur tout entier. Pour l'ensemble considéré (assemblage, fraction du coeur ou coeur), l'élévation d'enthalpie $\Delta$H peut être calculée à partir des températures d'entrée et de sortie de l'eau par une fonction polynomiale du second degré ou du troisième degré de la température, suivant la précision recherchée. Les températures d'entrée et de sortie comparées ne sont pas forcément celles mesurées au même instant, lorsqu'on souhaite tenir compte du temps de transit de l'eau constituant réfrigérant dans l'ensemble considéré.

La Figure 3C montre, dans le cas où le pilotage doit permettre de maintenir l'écart de déviation axiale à une valeur inférieure à + ou - 3%, des variations possibles de l'anti-réactivité insérée dans le coeur, dans le cas où les barres ou grappes de pilotage ont la disposition montrée en Figure 1. Sur cette Figure, les six emplacements de grappes de pilotage sont désignés par les nombres de 1 à 6 sur la Figure 3C. Ces nombres sont affectés de l'indice a pour les barres les plus insérées dans le coeur, b pour les barres les moins insérées dans le coeur dans un jeu de deux barres. On voit que seules les barres a sont insérées lorsque l'anti-réactivité à insérer ne dépasse pas 2000 pcm. Au-delà, il est nécessaire de faire intervenir les barres a et b pour maintenir l'écart de déviation axiale entre 17% et 20% : la variation de cet écart est alors celle montrée en Figure 3A. On voit apparaître sur cette Figure, pour une anti-réactivité d'environ 3000 pcm, une évolution discontinue de l'écart de déviation axiale, nécessaire pour permettre de maintenir le facteur d'élévation d'enthalpie $F\Delta H$ à une valeur sensiblement minimale et, en tout cas, inférieure à 1,3 (Figure 3B).

On décrira maintenant un exemple de mise en oeuvre du procédé suivant l'invention dans un réacteur dont le coeur a la constitution schématisée en Figure 1, où le pilotage s'effectue indépendamment pour chacun des six secteurs et où les conditions à respecter sont celles déjà définies à l'occasion de la description des Figures 3A et 3B.

Pour un réacteur donné, on peut définir, pour chaque assemblage, une relation reliant le facteur d'élévation d'enthalpie à la position des barres du secteur. En particulier, on peut définir le facteur d'élévation d'enthalpie $E = F\Delta H$ de l'assemblage le plus chaud par une relation qui est une combinaison linéaire de "fonctions influence" $f_{ij}$ précalculées :

$$E_j = E_{0j} + (\Sigma_i f_{ij}) \times (r_i) \quad (1)$$

où :
- $E_{0j}$ désigne le facteur d'élévation d'enthalpie $F\Delta H$ de départ,
- les fonctions $f_{ij}$ représentent la contribution de la barre i à $E_j$ pour l'état de départ $E_{0j}$,
- les termes $r_i$ sont les variations d'antiréactivité provoquées par les déplacements des barres i, avec i = 1a, 1b, ..., 6b,
- $E_j$ désigne le facteur $F\Delta H$ après déplacement des grappes provoquant les variations $r_i$, qu'on désignera par la suite, pour plus de simplicité, par 1a, 1b,..., 6b.

Il peut être nécessaire de remettre à jour les fonctions d'influence lorsque l'état du réacteur a beaucoup varié. On peut utiliser pour cela un calcul en ligne de distribution de puissance à trois dimensions.

Comme on l'a indiqué plus haut, le procédé de commande suivant l'invention réagit à toute évolution du paramètre de conduite qui le fait sortir de la bande morte en modifiant la position de l'une au moins des barres de commande, l'amplitude et le sens du déplacement de cette barre au moins étant déterminés de façon à :
- ramener le paramètre de conduite à l'intérieur de la bande morte,
- maintenir (ou ramener) l'écart de déviation axiale dans le domaine autorisé (Figure 3A),
- optimiser le facteur d'élévation d'enthalpie.

La première opération à effectuer consiste à calculer la variation de réactivité nécessaire pour ramener la température moyenne de sortie du secteur à la valeur de consigne ; ensuite, on met en oeuvre un processus de simulation visant à déterminer une barre (ou des barres) dont le déplacement réalisera cette variation en optimisant $F\Delta H$.

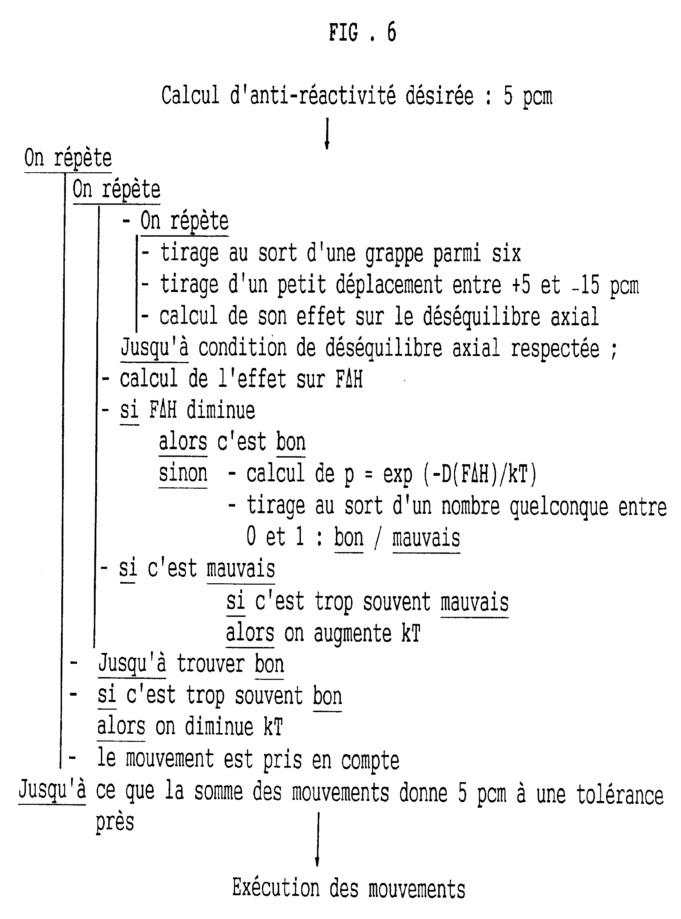

Pour cela, on peut notamment adopter la stratégie représentée par l'organigramme de la Figure 6. Cette stratégie implique le parcours de plusieurs boucles de commande, jusqu'à ce que l'écart entre la variation de réactivité attendue et la variation nécessaire soit inférieur à une valeur donnée.

1. La première opération consiste à tirer au sort :
- une barre parmi les six ou, plus généralement n, d'un secteur (en supposant pour le moment que les six barres homologues dans les six secteurs seront déplacées de la même quantité) ;
- un déplacement quelconque parmi tous les déplacements (y compris zéro) d'amplitude telle qu'ils provoquent une variation de réactivité comprise dans une plage déterminée autour de la variation de réactivité requise : par exemple, dans le cas illustré en Figure 6 d'une variation requise de - 5 pcm, ce déplacement peut être l'un quelconque de tous ceux qui provoquent une variation entre (- 5 + 10) = + 5 pcm et (- 5 - 10) = - 15 pcm ;

On vérifie alors par le calcul que ce déplacement ne fait pas sortir l'écart de répartition axiale du domaine autorisé,la détermination de la variation de l'écart de répartition axiale est effectuée après retenue d'une barre ( ou d'un groupe ) et d'un déplacement.

Si la condition n'est pas remplie, on renonce au déplacement essaye et on fait un nouveau tirage au sort qui fournit une nouvelle barre et/ou un nouveau déplacement.

On recommence le calcul et on répète les opérations jusqu'à ce que les conditions de distribution axiale soient respectées.

2. Lorsque la condition de répartition axiale est remplie, on calcule l'évolution $\Delta(F\Delta H)$ du facteur d'élévation d'enthalpie provoquée par le déplacement, suivant la formule (1) ci-dessus. Si, par exemple, l'état initial est E0, si la grappe 2a a été choisie et si le déplacement simulé change son antiréactivité de 2a en 2a mod, on obtient, pour l'assemblage le plus chaud, l'état E1 :

$$E1 = E0 + f_{1a}(1a) + \ldots + f_{2a}(2a\ mod) + \ldots + f_{6b}(6b)$$

(a) Si E1 - E0 = $\Delta(F\Delta H)$ est négatif ou nul, le déplacement est considéré comme satisfaisant et il est mémorisé.

(b) si $\Delta(F\Delta H)$ est positif, on affecte au déplacement une probabilité P comprise entre 0 et 1, fonction de la valeur absolue de $\Delta(F\Delta H)$ :

$$P = \exp[-\Delta(F\Delta H)/kT]$$

Cette probabilité P est une fonction dérivée de la loi de Boltzman sur la répartition des énergies en fonction de la température et, pour cette raison, la constante en dénominateur de l'exponentielle est désignée par kT.

Lors de l'initialisation du procédé, on donne à kT une valeur très élevée, de façon que l'exponentielle négative qui représente P ait une valeur proche de 1. En pratique on donnera généralement à kT une valeur supérieure à la valeur maximale de Δ(FΔH) d'au moins un ordre de 35 grandeur.

Une fois la valeur de φ déterminée par le calcul pour la valeur Δ(FΔ)H) = E1 = E0 à laquelle conduit le déplacement essayé, on effectue un tirage d'un nombre quelconque entre 0 et 1 : la proportion moyenne de tirages favorables, c'est-à-dire compris entre 0 et P, est égale à cette probabilité.

- Si le tirage au sort est positif, c'est-à-dire si la valeur choisie au hasard est inférieure à 0,8, on considère que la valeur E1 est la valeur nominale.
- Dans le cas contraire, on ne prend pas le résultat en compte, c'est-à-dire qu'on abandonne la barre et le déplacement essayes, et on tire au sort une nouvelle barre et/ou un nouveau déplacement, ce qui correspond au parcours d'une nouvelle boucle sur la Figure 6.

Lors de l'état initial du système, la probabilité étant proche de 1, les tirages au sort d'un nombre entre 0 et 1 donnent presque tous un résultat positif. Le procédé met avantageusement en oeuvre un circuit ou un programme de calcul qui fait le rapport entre le nombre de tirages positifs et le nombre total de déplacements essayés, Si le résultat est trop souvent favorable (par exemple supérieur à 90% des cas), on diminue kT d'un incrément déterminé ; si au contraire la probabilité est trop faible, par exemple inférieure à 70%, on augmente kT du même incrément ou d'un autre.

L'opération est répétée jusqu'à ce qu'une barre et un déplacement soient retenus ; les valeurs retenues et la variation correspondante d'antiréactivité sont alors mémorisées.

L'acceptation de déplacement de barres pouvant provoquer une augmentation de FΔH est nécessaire. Dans certaines situations, aucun déplacement ne permettra de diminuer davantage encore FΔH.

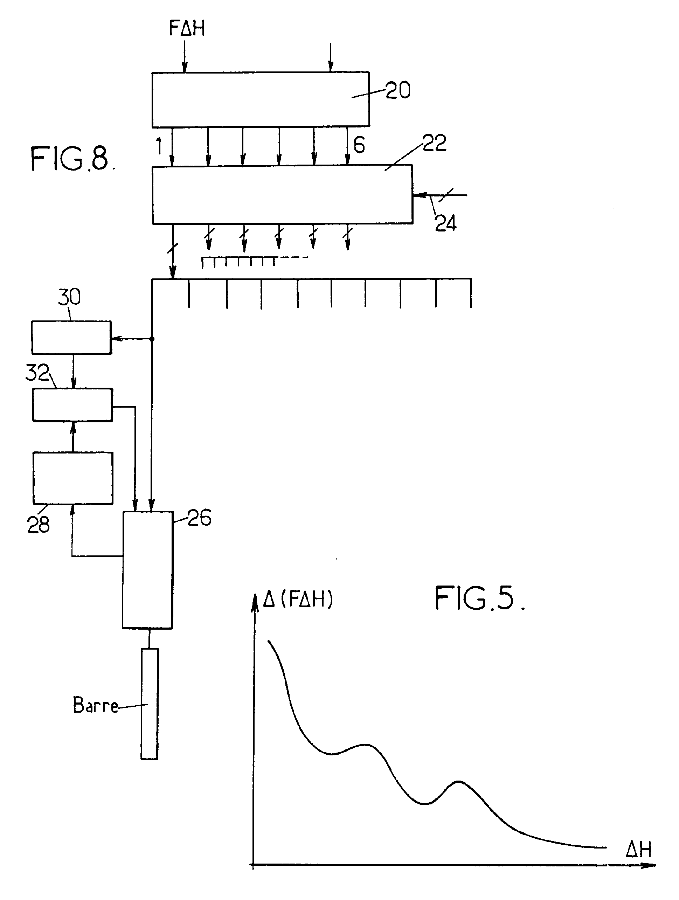

De plus, prendre en compte des modifications qui, a priori, ne semblent pas aller dans le bon sens, permet de faire sortir de faire le système d'un minimum secondaire de la fonction (tel que ceux qui apparaissent sur la Figure 5) pour en trouver un meilleur.

3. Le processus de simulation est répété jusqu'à ce que la somme des déplacements prévus (le nombre de barres concernées pouvant aller de 1 à 6 dans le cas de l'exemple considéré, pour un même secteur) fournisse la variation de réactivité requise, avec une tolérance prédéterminée. Les déplacements sont alors tous effectués par l'intermédiaire d'actionneurs.

La Figure 5 montre que, pour chaque assemblage, la courbe de variation du facteur d'élévation d'enthalpie Δ(FΔH) en fonction de ΔH passe par des minima successifs. Le procédé suivant l'invention permet de choisir des déplacements correspondant à la venue à un minimum, qui n'est pas forcément la valeur la plus basse possible.

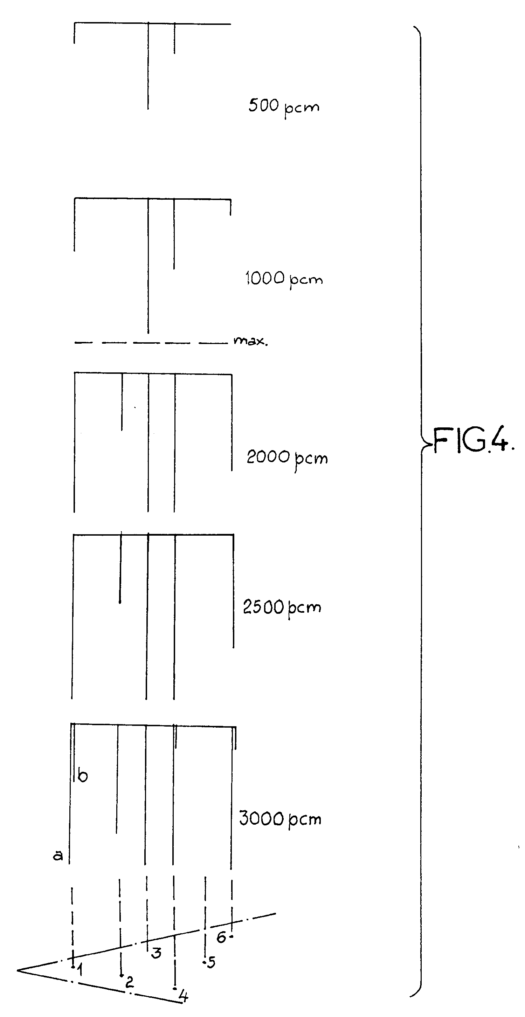

La Figure 4 montre, à titre d'exemple, des dispositions de barre représentatives, pour plusieurs antiréactivités insérées.

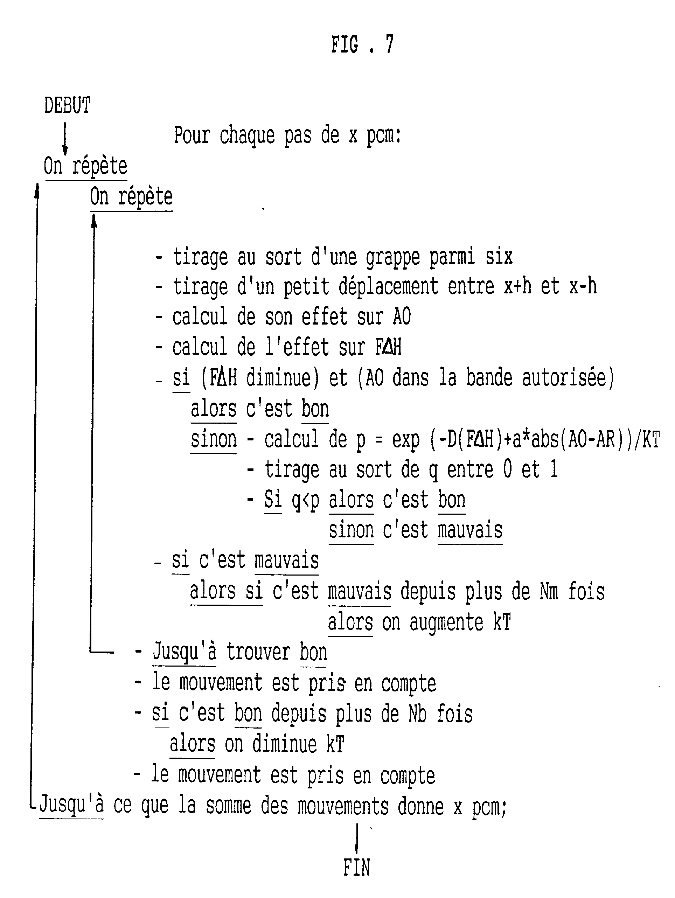

L'organigramme de la Figure 6 est susceptible de nombreuses variantes. En particulier, on peut adopter celui de la Figure 7, dans lequel le calcul de l'effet du déplacement des grappes sur le déséquilibre axial n'est effectué qu'à l'issue du choix aléatoire de barres et de déplacements permettant d'arriver à la variation requise d'antiréactivité avec un effet acceptable sur FΔH.

On ne décrira pas en détail l'organigramme de la Figure 7, car il découle directement de celui de la Figure 6. Cet organigramme correspond au cas où un premier calcul a montré que la variation totale de réactivité à obtenir est de x pcm ; a, h, Nm et Nb sont des paramètres ajustables dont les valeurs sont déterminées à l'avance par des études de dimensionnement. Les abréviations désignent :

A0 : déviation axiale
FΔH : facteur d'élévation d'enthalpie
abs : valeur absolue

On a supposé jusqu'à présent que toutes les barres appartenant à un même groupe, par exemple les barres 2a dans les six secteurs, sont simultanément déplacées de la même quantité à l'issue du calcul. Ce mode de fonctionnement ne prend pas en considération les déséquilibres azimutaux éventuels de la distribution de puissance. Or, de tels déséquilibres, de faible valeur, peuvent intervenir soit par suite d'irrégularités mécaniques ou géométriques, soit (en particulier, lorsque les barres sont commandées par des mécanismes hydrauliques pouvant présenter des fuites), à la suite de dérives lentes d'une ou plusieurs barres.

Les réacteurs sont en règle générale munis de thermocouples permettant de mesurer la température de l'eau sous pression à la sortie des assemblages individuels et de chambres d'ionisation placées hors du coeur et permettant de mesurer le flux neutronique. Les mesures fournies par ces capteurs permettent de calculer les déséquilibres azimutaux par des codes connus, tels que le code "PROSPER", de la société demanderesse. Les déséquilibres sont représentables par des harmoniques dont l'amplitude donne l'importance du déséqui-

7

libre et dont la phase permet de déterminer l'axe de la dissymétrie. En modifiant légèrement le degré d'insertion d'une grappe ou de grappes placées à proximité de l'axe de la dissymétrie, on peut ramener celle-ci en dessous d'un seuil de tolérance.

La Figure 8 est un schéma montrant un mode de commande des barres permettant d'atténuer les déséquilibres azimutaux. Sur la Figure 8, la référence 20 désigne un calculateur permettant, par mise en oeuvre de l'algorithme de la Figure 6 ou de la Figure 7, de déterminer les déplacements à donner aux barres appartenant aux groupes 1 à 6 (ou 1 à 12 en cas de barres doubles). Au lieu d'appliquer directement les ordres fournis par les sorties 1 à 12, chacun à toutes les barres d'un même groupe, le calculateur envoie ces ordres, constitués par une indication d'amplitude et une indication de sens, à un circuit 22 de calcul des déplacements individuels à donner aux barres, en fonction d'informations de déséquilibre azimutal, fournies sur des entrées 24.

Dans un mode de réalisation simple, les entrées 24 fournissent simplement six coefficients, permettant de répartir, entre les barres d'un même groupe, des écarts par rapport au déplacement nominal calculé par le calculateur 20 en respectant la condition de maintien de la modification requise d'antiréactivité.

Dans un mode de réalisation plus élaboré, l'entrée 24 reçoit une matrice de coefficients de correction à 6 x 6 (ou 6 x 12) termes, permettant d'affiner le résultat. Cette matrice de coefficients peut être fournie par un calculateur séparé (non représenté) utilisant un code de calcul existant. Dans ce cas, le circuit 22 doit effectuer une multiplication matricielle de la matrice de déplacement fournie par le calculateur 20 pour les trente-six (ou soixante-douze) barres et de la matrice de coefficients.

Quelle que soit la solution adoptée, le circuit 22 fournit, sur trente-six sorties (dans le cas de barres simples) ou de soixante-douze sorties (dans le cas de barres doubles) des informations individuelles de sens et d'amplitude qui sont envoyées à des mécanismes de commande respectifs 26.

Dans le cas où le mécanisme 26 est hydraulique, il comporte généralement un vérin dont le piston supporte la barre et un actionneur à mouvement alternatif, chaque mise en action de l'actionneur déplaçant le vérin d'un pas d'amplitude déterminé. Le vérin étant susceptible de présenter des fuites qui se traduisent par une descente lente de la barre, un système de recalage peut être prévu pour compenser ce glissement. Dans le mode de réalisation montré en Figure 8, ce système comprend des moyens 28 de repérage de la position de la barre en plusieurs points, un compteur 30 qui reçoit des ordres envoyés au mécanisme 26 et élabore, à partir de ces ordres, la position théorique de la grappe, et enfin un comparateur 32 qui est déclenché chaque fois que la barre ou son mécanisme de commande passe devant un point de mesure du système de repérage de position. Le comparateur fait la différence entre la cote théorique, donnée par le compteur 30, et la cote effective, donnée par le point de repérage et connue par construction. Si la différence est supérieure à un pas de fonctionnement de la pompe, le comparateur 32 envoie à l'actionneur de la barre un ordre de montée ou de descente d'un nombre de pas d'avance correspondant à la compensation du glissement.

L'invention est susceptible de nombreux autres variantes encore de réalisation. En particulier, le nombre de barres par secteur pourrait souvent être réduit, par suppression du groupe 5 qui est peu utile. L'utilisation de bi-grappes, plutôt que de grappes uniques, n'est nécessaire que pour les phases de retour en puissance après un arrêt de longue durée, ayant permis à la teneur en xénon de diminuer. D'autres paramètres pourraient être mis en oeuvre, par exemple pour réduire la puissance linéique maximum des crayons de combustible, prenant en compte les critères d'interactions chimiques entre la gaine des crayons et les pastilles de combustible.

## Revendications

1. Procédé de pilotage de réacteur nucléaire à eau sous pression, du type suivant lequel on modifie la position de barres de pilotage dans le coeur lorsqu'un paramètre de conduite représentatif de l'écart entre la puissance du coeur et la puissance appelée (tel que la température moyenne du coeur) sort d'un intervalle déterminé, dit "bande morte", les barres déplacées étant choisies de façon à éviter d'accentuer l'écart entre la déviation axiale de puissance et une valeur de référence,

   **caractérisé en ce que**, les barres de pilotage absorbantes (1a, 1b,..., 6b) ayant une anti-réactivité suffisante pour compenser la totalité des variations de réactivité intervenant au cours du fonctionnement normal du réacteur et en cas d'incident requérant l'arrêt d'urgence du réacteur alors que l'eau est à sa température normale de fonctionnement - lorsque le paramètre de conduite sort de la bande morte et/ou que l'écart de la distribution axiale de puissance dépasse une valeur de référence, on détermine, par un processus de simulation, celles des barres qui doivent être déplacées de façon à ramener ledit paramètre de conduite et/ou ledit écart vers leurs valeurs normales tout en minimisant un facteur d'élévation d'enthalpie dans le coeur.

2. Procédé selon la revendication 1, caractérisé en ce que, en réponse à une variation du paramètre de conduite qui l'amène hors de la bande morte,

on calcule la variation d'anti-réactivité nécessaire pour ramener ledit paramètre de conduite vers le milieu de la bande morte,

on simule l'incidence, sur l'anti-réactivité, du déplacement d'une barre ou d'un groupe de barres, choisi au hasard dans l'ensemble du coeur ou dans un secteur du coeur, dans une plage de déplacements centrée autour du déplacement qui fournirait la variation d'anti-réactivité nécessaire,

on détermine la variation de l'écart de répartition axiale provoquée par un tel déplacement,

on répète éventuellement la simulation à partir d'un nouveau choix au hasard d'une barre ou d'un groupe de barres jusqu'à ce que la variation de répartition axiale provoquée ne se traduit pas par un écart de distribution dépassant une valeur de référence prédéterminée,

on calcule la variation du facteur d'élévation d'enthalpie provoquée par le déplacement simulé,

on retient la barre (ou le groupe) et le déplacement correspondants si la variation du facteur est négative, tandis qu'on ne la retient qu'avec une probabilité P fonction de l'amplitude de cette variation si cette variation est positive,

on répète les opérations ci-dessus jusqu'à ce que la variation totale d'anti-réactivité soit égale à la variation nécessaire à une tolérance près,

et on donne alors aux barres ou groupes de barres retenus les déplacements retenus.

3. Procédé selon la revendication 2, caractérisé en ce que la détermination de la variation de l'écart de répartition axiale est effectuée, après retenue d'une barre (ou d'un groupe) et d'un déplacement.

4. Procédé selon la revendication 2 ou 3, caractérisé en ce que la probabilité P est déterminée par calcul de

$$P = \exp [ - \Delta (F\Delta H) / kT]$$

où (F$\Delta$H) est le facteur d'élévation d'enthalpie, et kT est une constante ayant une valeur supérieure à la valeur maximale de $\Delta$ (F$\Delta$H) d'au moins un ordre de grandeur.

5. Procédé selon la revendication 4, caractérisé en ce qu'on donne initialement a kT une valeur conduisant à une probabilité proche de 1 et on diminue progressivement aussi longtemps que la probabilité reste en moyenne supérieure à une valeur déterminée.

6. Procédé selon l'une quelconque des revendications 2 à 5, caractérisé en ce que le coeur est fractionné en plusieurs secteurs angulaires de même constitution et en ce qu'on déplace simultanément les barres de pilotage ayant des positions homologues dans tous les secteurs.

7. Procédé selon la revendication 6, caractérisé en ce qu'on donne le même déplacement à toutes les barres homologues.

8. Procédé selon la revendication 6, caractérisé en ce qu'on module le déplacement des barres homologues pour compenser les déséquilibres azimutaux de distribution de puissance.

9. Procédé selon l'une quelconque des revendications précédentes, caractérisé en ce qu'on maintient le réacteur à l'arrêt à l'aide de barres noires ayant chacune une absorption neutronique à peu près double de celle d'une barre de pilotage.

10. Procédé selon l'une quelconque des revendications précédentes, caractérisé en ce que des barres contenant du poison consommable sont utilisées pour modifier le spectre d'énergie des neutrons en les extrayant du coeur.

11. Procédé selon l'une quelconque des revendications précédentes, caractérisé en ce que les barres de pilotage sont réparties par couples, les barres d'un même couple occupant un même emplacement dans le coeur.


**Patentansprüche**

1. Verfahren zur Regelung eines Druckwasserkernreaktors, von der Art, bei der die Position von Regelungsstäben im Reaktorkern verändert wird, wenn ein Steuerparameter, der den Unterschied zwischen der Leistung des Kerns und der abgefragten Leistung darstellt (zum Beispiel die mittlere Kerntemperatur), ein festgelegtes, als „toten Bereich" bezeichnetes Intervall verläßt und bei dem die verschobenen Stäbe so ausgewählt werden, daß eine Verstärkung des Abstands zwischen der axialen Leistungsabweichung und einem Referenzwert vermieden wird dadurch gekennzeichnet, daß, wobei die absorbierenden Regelungsstäbe eine ausreichende negative Reaktivität haben, um die Gesamtheit der Reaktivitätsänderungen zu kompensieren, die im Laufe des Normalbetriebs des Reaktors und im Falle eines Zwischenfalls, der den Nothalt des Reaktors erfordert, während das Wasser bei seiner normalen Arbeitstemperatur ist, auftreten - wenn der Steuerparameter den toten Bereich verläßt und/oder die Abweichung der axialen Leistungsverteilung einen Referenzwert überschreitet, durch einen Simulationsprozess diejenigen der Stäbe bestimmt werden, die bewegt werden müssen, um den Steuerparameter und/oder die Abweichung auf ihre normalen Werte zurückzuführen, unter Minimierung eines Enthalpie-Erhöhungsfaktors im Kern.

2. Verfahren nach Anspruch 1, dadurch gekennzeichnet, daß in Reaktion auf eine Änderung des Steuerparameters, die ihn aus dem toten Bereich herausführt, die Änderung der negativen Reaktivität berechnet wird, die notwendig ist, um den Steuerparameter in die Mitte des toten Bereichs zurückzuführen,
der Einfluß der Bewegung eines zufällig im gesamten Kern oder in einem Sektor des Kerns ausgewählten Stabs oder einer Gruppe von Stäben simuliert wird, wobei die Bewegung aus einem Bereich zufällig ausgewählt wird, der um die Bewegung, die die notwendige Änderung der negativen Reaktivität liefern würde, zentriert ist, die Änderung des durch eine solche Bewegung hervorgerufenen Abstands der axialen Verteilung bestimmt wird,
die Simulation eventuell ausgehend von einer neuen zufälligen Auswahl eines Stabes oder einer Gruppe von Stäben wiederholt wird, bis die hervorgerufene Änderung der axialen Verteilung nicht mehr zu einem Abstand der Verteilung führt, der einen vorher festgelegten Referenzwert überschreitet,
die Änderung des Enthalpie-Erhöhungsfaktors durch die simulierte Bewegung berechnet wird,
der Stab (oder die Gruppe) und die zugehörigen Bewegungen beibehalten werden, wenn die Änderung des Faktors negativ ist, wohingegen sie nur mit einer von der Amplitude dieser Änderung abhängigen Wahrscheinlichkeit $P$ beibehalten werden, wenn diese Veränderung positiv ist,
obige Schritte solange wiederholt werden, bis die Gesamtänderung der negativen Reaktivität der notwendigen Änderung innerhalb der Toleranz gleicht,
und anschließend die beibehaltenen Bewegungen der beibehaltenen Stäbe oder Gruppen von Stäben durchgeführt werden.

3. Verfahren nach Anspruch 2, dadurch gekennzeichnet, daß die Änderung des Abstands der axialen Verteilung bestimmt wird, nachdem ein Stab (oder eine Gruppe) beibehalten worden sind.

4. Verfahren nach Anspruch 2 oder 3, dadurch gekennzeichnet, daß die Wahrscheinlichkeit $P$ bestimmt ist durch die Berechnung von

$$P = exp[ - \Delta(F\Delta H)/kT],$$

wobei $(F\Delta H)$ der Enthalpie-Erhöhungsfaktor und $kT$ eine Konstante mit einem um mindestens eine Größenordnung größeren Wert als der Maximalwert von $\Delta(F\Delta H)$ ist.

5. Verfahren nach Anspruch 4, dadurch gekennzeichnet, daß $kT$ anfänglich ein Wert zugewiesen wird, der eine Wahrscheinlichkeit nahe bei 1 ergibt und ihn solange fortlaufend verringert, wie die Wahrscheinlichkeit im Mittel über einem bestimmten Wert bleibt.

6. Verfahren nach einem beliebigen der Ansprüche 2 bis 5, dadurch gekennzeichnet, daß der Kern in mehrere Winkelsektoren mit derselben Beschaffenheit aufgeteilt wird, und daß die Regelungsstäbe mit äquivalenten Positionen in allen Sektoren gleichzeitig bewegt werden.

7. Verfahren nach Anspruch 6, dadurch gekennzeichnet, daß alle äquivalenten Stäbe im gleichen Maße bewegt werden.

8. Verfahren nach Anspruch 6, dadurch gekennzeichnet, daß die Bewegung der äquivalenten Stäbe moduliert wird, um azimutale Ungleichgewichte der Leistungsverteilung auszugleichen.

9. Verfahren nach einem beliebigen der vorangehenden Ansprüche, dadurch gekennzeichnet, daß der Reaktor mit Hilfe von schwarzen Stäben, von denen jeder eine ungefähr doppelt so große Neutronenabsorption wie ein Regelungsstab hat, im Haltezustand gehalten wird.

10

EP 0 369 865 B1

**10.** Verfahren nach einem beliebigen der vorangehenden Ansprüche, dadurch gekennzeichnet, daß Stäbe, die abbrennbares Gift enthalten, benutzt werden um durch ihr Herausziehen aus dem Kern das Energiespektrum der Neutronen abzuwandeln.

**11.** Verfahren nach einem beliebigen der vorangehenden Ansprüche, dadurch gekennzeichnet, daß die Regelungsstäbe paarweise verteilt sind, wobei die Stäbe eines Paares denselben Platz im Kern besetzen.

## Claims

**1.** Method of controlling a pressurized water nuclear reactor, of the type in which the position of control bars in the core is modified when a driving parameter representative of the difference between the power of the core and the called power (such as the mean temperature of the core) departs from a given range, called "dead band", the displaced bars being selected so as to avoid increasing a difference between the axial power deviation and a reference value,
characterized in that, the absorbent control bars (1a, 1b, .. 6b) having sufficient anti-reactivity for compensating the whole of the reactivity variations occuring during normal operation of the reactor and upon an incident requiring emergency shut-down of the reactor when the coolant is at its normal operating temperature - when the driving parameter departs from the dead band and/or when the deviation of the axial power distribution exceeds a reference value, using a simulation procedure, those of the bars are determined which must be displaced so as to bring said driving parameter and/or said deviation back to their normal values while minimizing an enthalpy rise factor in the core.

**2.** Method according to claim 1,
characterized in that, in response to a variation of the driving parameter which brings it out of the dead band,
- the anti-reactivity variation required for bringing said control parameter back towards the middle of the dead band is computed,
- the influence on the amount of anti-reactivity of the displacement of a bar or of a group of bars, chosen at random in whole the core or in a sector of the core, in a range of displacements centred about the displacement which would give the required anti-reactivity variation is computed,
- the variation of the axial distribution deviation caused by such a displacement is determined,
- the simulation is possibly repeated with a new selection at random of a bar or a group of bars until the axis distribution variation caused does not result in a distribution variation exceeding a pre-determined reference value,
- the variation of the enthalpy rise factor caused by the simulated displacement is computed,
- the respective bar (or group) and amount of displacement are stored if the variation of the factor is negative, whereas it is only selected with a probability depending on the amplitude of this variation if this variation is positive,
- the above operations are repeated until the total antireactivity variation is equal to the variation required except for a tolerance,
- and then the bars or groups of bars selected are given the selected amounts of displacement.

**3.** Method according to claim 2,
characterized in that determination of the variation of the axial distribution deviation is carried out, after selection of a bar (or a group) and an amount of displacement.

**4.** Method according to claim 2 or 3,
characterized in that the probability P is determined by calculating:
$$P = \exp\left[ - \Delta(F\Delta H) / kT \right]$$
where (F$\Delta$H) is the enthalpy rise factor and kT is a constant having a value greater than the maximum value of $\Delta(F\Delta H)$ by at least one order of magnitude.

**5.** Method according to claim 4,
characterized in that kT is initially given a value leading to a probability close to 1 an is reduced progressively as long as the probability remains on average greater than a predetermined value.

**6.** Method according to any one of claims 2 to 5,
characterized in that the core is split up into a plurality of angular sectors having a same construction and

11

in that the control bars having homologous positions in all sectors are moved simultaneously.

7. Method according to claim 6,
   characterized in that the same amount of displacement is given to all homologous bars.

8. Method according to claim 6,
   characterized in that the amount of displacement of the homologous bars is modulated so as to offset the azimuth power distribution imbalances.

9. Method according to any one of the preceding claims,
   characterized in that the reactor is kept shut-down with "black" bars each having a neutron absorption substantially double that of a control bar.

10. Method according to any one of the preceding claims,
    characterized in that bars containing burnable poison are used for modifying the energy spectrum of the neutrons by removing them from the core.

11. Method according to any one of the preceding claims,
    characterized in that the control bars are distributed in pairs, the bars of the same pair occupying a same position in the core.

FIG.1.

FIG.2.

FIG.3A.

FIG.3B.

FIG.3C.

500 pcm

1000 pcm

max.

2000 pcm

2500 pcm

3000 pcm

b

a

1
2
3
4
5
6

FIG.4.

FΔH

20

FIG.8.

1          6

22

24

30

32

28          26

Barre

Δ (FΔH)

FIG.5.

ΔH

FIG . 6

Calcul d'anti-réactivité désirée : 5 pcm

On répète

On répète

- On répète
  - tirage au sort d'une grappe parmi six
  - tirage d'un petit déplacement entre +5 et -15 pcm
  - calcul de son effet sur le déséquilibre axial

Jusqu'à condition de déséquilibre axial respectée ;
- calcul de l'effet sur F∆H
- si F∆H diminue

    alors c'est bon

    sinon  - calcul de p = exp (-D(F∆H)/kT)
            - tirage au sort d'un nombre quelconque entre
              0 et 1 : bon / mauvais
- si c'est mauvais

        si c'est trop souvent mauvais

        alors on augmente kT
- Jusqu'à trouver bon
- si c'est trop souvent bon

  alors on diminue kT
- le mouvement est pris en compte

Jusqu'à ce que la somme des mouvements donne 5 pcm à une tolérance
        près

Exécution des mouvements

## FIG . 7

DEBUT

Pour chaque pas de x pcm:

On répète

On répète

- tirage au sort d'une grappe parmi six
- tirage d'un petit déplacement entre x+h et x-h
- calcul de son effet sur A0
- calcul de l'effet sur F$\Delta$H
- si (F$\Delta$H diminue) et (A0 dans la bande autorisée)
  alors c'est bon
  sinon - calcul de p = exp (-D(F$\Delta$H)+a*abs(AO-AR))/KT
         - tirage au sort de q entre 0 et 1
         - Si q<p alors c'est bon
                  sinon c'est mauvais
- si c'est mauvais
  alors si c'est mauvais depuis plus de Nm fois
        alors on augmente kT
- Jusqu'à trouver bon
- le mouvement est pris en compte
- si c'est bon depuis plus de Nb fois
  alors on diminue kT
- le mouvement est pris en compte

Jusqu'à ce que la somme des mouvements donne x pcm;

FIN